# DEMANDE DE BREVET EUROPEEN

(11) **EP 0 823 988 A1**
(43) Date de publication de la demande: **18.02.1998**
(21) Numéro de dépôt: 97401836.8
(22) Date de dépôt: 31.07.1997
(51) Int. Cl.: A01G 31/00

(54) **Substrat pour le développement des végétaux sur les toitures-terrasses**

(30) Priorité: 14.08.1996 FR 9610200
(71) Demandeur: ISOVER SAINT-GOBAIN, 92400 Courbevoie (FR)
(72) Inventeur: Le Bihan, Christine, 75020 Paris (FR)
(74) Mandataire: Goldenberg, Virginie Isabelle

(57) **Abrégé**

La présente invention concerne un substrat pour le développement des végétaux sur les toitures-terrasses, ce substrat étant formé d'au moins une couche de laine minérale (1) et pourvu, sur sa face destinée à recevoir les végétaux, d'au moins un site d'accrochage en creux ou en relief (3, 4) distinct des logements éventuels (2) devant recevoir les végétaux lors de la plantation.

Le substrat selon l'invention permet un développement rapide des plants, une colonisation plus homogène et l'obtention de plantes saines et vigoureuses.

## Description

La présente invention concerne un substrat (ou support) en laine minérale pour la plantation et la pousse de végétaux sur les toitures-terrasses. L'invention vise plus particulièrement les substrats pour le développement des plantes à des fins esthétiques destinés aux toitures-terrasses paysagères.

Les supports de plantes pour toitures-terrasses sont déjà connus et décrits, par exemple, dans les demandes de brevets WO 95/08259 et WO 93/18642. Leur utilisation tend à devenir plus fréquente avec l'accroissement des zones urbaines et présente plusieurs avantages : en favorisant l'apport de plantes sur les bâtiments, elle contribue à l'esthétique des bâtiments et à l'amélioration de la qualité de l'air dans les villes. Les espaces verts nouvellement créés permettent le maintien de la vie animale (insectes, papillons...) et la fixation des poussières dans les villes. Les substrats munis de plantes utilisés pour les toitures-terrasses paysagères permettent également d'améliorer l'isolation thermique et phonique des bâtiments et protègent les chapes d'étanchéité des toitures contre les rayonnements UV. En stockant temporairement les eaux de pluie, ils contribuent par ailleurs à la régulation des quantités d'eaux pluviales devant être évacuées par le réseau d'assainissement.

Les substrats en laine minérale utilisés jusqu'à présent pour le développement des plantes ou végétaux sur les toitures-terrasses paysagères se présentent sous forme de panneaux de grandes dimensions (plusieurs dizaines de cm de largeur et de longueur) constitués d'une couche de laine minérale, ces grands panneaux présentant l'avantage d'être faciles et rapides à poser. Contrairement aux substrats tourbeux, de tels substrats de laine minérale sont de mise en oeuvre et d'entretien aisés, sont propres et légers et n'entraînent pas de surcharge importante sur les toits où ils sont disposés. La facilité de manipulation de ces substrats et leur légèreté sont particulièrement appréciables lorsqu'il s'agit de recouvrir des toitures-terrasses inaccessibles », non conçues pour de fortes surcharges et recevant peu d'entretien. Dans ce dernier cas notamment, les végétaux (sous forme de plants, de graines...) sont disposés sur les substrats de façon à obtenir une structure homogène et une couverture satisfaisante du substrat le plus rapidement possible, à des distances néanmoins suffisantes les uns des autres pour permettre à chaque plante de se développer sans entraver la croissance des plantes proches. Le développement des plantes et la colonisation des substrats par ces plantes sont cependant peu rapides (le temps nécessaire pour atteindre un taux de couverture satisfaisant des supports - notamment supérieur à 50 % - est généralement de plusieurs mois) et se font parfois difficilement. La plantation d'un plus grand nombre de plants pour obtenir plus rapidement un taux de couverture esthétiquement satisfaisant et une protection suffisante des toitures est cependant difficilement envisageable pour des raisons de coût notamment.

La présente invention a donc pour but de fournir des substrats devant servir de support pour le développement des végétaux sur les toitures-terrasses, en particulier des substrats destinés aux toitures-terrasses paysagères, et ne présentant pas les inconvénients précédemment mentionnés des substrats existants. Elle a notamment pour but de fournir des supports permettant le développement rapide des végétaux et favorisant la colonisation de leur surface par lesdits végétaux (ou la répartition des végétaux sur l'ensemble de leur surface).

Ce but est obtenu à l'aide des substrats selon l'invention, ces substrats étant formés d'au moins une couche de laine minérale (par exemple de la laine de roche) et étant pourvus, sur au moins une de leurs faces, d'au moins un site d'accrochage en creux ou en relief distinct des logements (ou sites) éventuels devant recevoir les végétaux lors de la plantation.

Le ou les sites (ou « zones » ou « espaces » ou « surfaces »...) d'accrochage selon l'invention sont plus particulièrement des évidements ou saillies se trouvant à la surface du substrat du côté du substrat destiné à recevoir les végétaux et favorisent l'expansion des plantes et le recouvrement du substrat par lesdites plantes en servant de points d'ancrage aux parties aériennes des plantes au fur et à mesure de leur développement.

Les sites d'accrochage en relief peuvent être en laine minérale ou en une matière différente. De préférence, les sites d'accrochage selon l'invention sont des évidements distincts des logements devant initialement recevoir les végétaux lorsque de tels logements sont prévus sur les substrats. Ces sites d'accrochage en creux peuvent être qualifiés d'espaces « vides » ou d'évidements « stériles » dans le sens où, à tous les stades d'utilisation du substrat, ils ne portent pas (ou sont exempts) d'éléments vivants apportés artificiellement tels que des graines, des plants, des plantules, des boutures, des auxiliaires contre des ravageurs des cultures, etc. (par contre, les parties aériennes des plantes s'accrochant sur les bords de ces évidements peuvent développer des racines de façon naturelle autour et dans ces sites).

Les dimensions des sites d'accrochage selon l'invention (et en particulier des sites en creux) sont avantageusement choisies de façon à ce que ces sites présentent des conditions d'aération, d'humidité, de température... particulièrement favorables à l'accrochage, au développement et au fonctionnement des racines. De préférence, ces sites sont de faibles dimensions (quelques centimètres, voire quelques millimètres). Notamment, la profondeur ou épaisseur des sites d'accrochage est préférentiellement inférieure à 90 % (et de façon particulièrement préférée inférieure à 80 %) de l'épaisseur du substrat. De préférence, elle est également supérieure à 0,1 mm et, dans la plupart des cas, est supérieure à 1 mm. Les sites d'accrochage en creux selon l'invention se présentent avantageusement sous forme de fentes ou rainures et/ou de trous. De façon particulièrement préférée, ils se présentent sous forme de rainures de largeur inférieure ou égale à 15 mm (et avantageusement inférieure ou égale à 10 mm) dans le sens de la longueur et/ou de la largeur du substrat, et/ou sous forme de trous de diamètre inférieur ou égal à 40 mm (avantageusement inférieur ou égal à 20 mm) ou de périmètre inférieur ou égal à 120 mm (et avantageusement inférieur ou égal à 60 mm), en particulier pour les trous de section non circulaire. De préférence également, les sites d'accrochage en creux présentent une largeur (pour les rainures) ou un diamètre (pour les trous) d'au moins 1 mm.

Les substrats selon l'invention présentent avantageusement plusieurs sites d'accrochage en creux ou en relief, ces sites étant disposés entre les végétaux ou rangées de végétaux. En particulier, les sites d'accrochage peuvent être disposés en alternance avec les rangées de végétaux. De préférence, le nombre de sites d'accrochage en creux ou en relief est choisi en fonction des dimensions de ces sites de façon à augmenter la surface d'accrochage du substrat d'au moins 3 % et, de préférence, d'au moins 8 % par rapport au substrat dénué de sites d'accrochage selon l'invention. En général et de façon préférée, le nombre de sites d'accrochage est inférieur à 100 par m² de substrat, de façon particulièrement préférée inférieur à 80 au m² et, dans la plupart des cas, inférieur à 60 au m².

Les sites d'accrochage favorisent le développement des plantes et la colonisation » du substrat par les plantes et permettent l'obtention d'une végétation vigoureuse couvrant de façon homogène les substrats selon l'invention. On obtient rapidement (quelques mois au plus) des taux de couverture satisfaisants (supérieurs à 50 %) avec des plantes vigoureuses et saines sans utilisation d'un nombre initial élevé de végétaux par substrat.

Les substrats selon l'invention se présentent de préférence sous forme de panneaux ou plaques de plusieurs dizaines de centimètres de largeur et de longueur, généralement sous forme de panneaux rectangulaires. L'épaisseur de ces substrats est, dans la plupart des cas, inférieure à 15 cm, de préférence inférieure ou égale à 10 cm.

Les substrats selon l'invention présentent préférentiellement une masse volumique comprise entre 30 et 180 kg/m³ (et de façon particulièrement préférée entre 100 et 150 kg/m³) de façon, notamment, à présenter une résistance mécanique suffisante pour leur utilisation en toitures-terrasses et se caractérisent par une rétention d'eau à pF1 comprise entre 50 et 95 % pour permettre un bon développement et une bonne conservation des plantes même lorsque l'entretien (par exemple l'arrosage) des plantes est faible (cas des toitures-terrasses inaccessibles). Cette rétention par le substrat est déterminée en soumettant des échantillons de substrat à des forces de succion. On définit ainsi pour une dépression exprimée en fonction du logarithme de la hauteur de colonne d'eau (en cm) nommé pF, le pourcentage de volume de substrat occupé par la phase aqueuse. Les mesures sont faites dans le cas présent à pF1 (c'est-à-dire pF = 1, c'est-à-dire à une dépression à 10 cm de colonne d'eau) après 24 heures de dépression.

Les substrats selon l'invention sont constitués d'au moins une couche de laine minérale (telle que de la laine de verre ou de la laine de roche) et de préférence d'au moins une couche de laine de roche. Les fibres constituant la couche présentent de préférence un fasonaire compris entre 100 et 350 et, de façon particulièrement préférée, entre 150 et 250 millimètres de colonne d'eau environ. La mesure du fasonaire est une détermination de l'indice de finesse des fibres par une méthode similaire à celle du micronaire selon les normes ASTM-D-1448 ou DIN 53941. Le fasonaire est égal à la perte de charge ou différence de débit d'un courant gazeux traversant une éprouvette constituée d'une touffe de fibres minérales de masse donnée (égale à 5 g pour les mesures selon l'invention). La touffe de fibres, exemptes de liant ou de tout autre composant non fibreux, est comprimée dans une chambre cylindrique de volume prédéterminé. Le débit de gaz étant maintenu constant, on mesure à l'aide d'une colonne d'eau graduée en unités conventionnelles appelées fasonaires, la perte de charge à travers l'éprouvette. Le fasonaire est ainsi exprimé en millimètres de colonne d'eau pour 5 g (masse de l'éprouvette).

Les substrats selon l'invention peuvent être réalisés à partir des feutres de laine minérale obtenus selon des procédés habituels. Notamment, les substrats peuvent être réalisés en étirant de la roche basaltique fondue ou du verre fondu sous forme de fibres par centrifugation (sur des rotors tournant à grande vitesse ou dans des assiettes de fibrage) puis en projetant un liant sur ces fibres et en collectant les fibres sur un convoyeur perméable aux gaz et à l'eau mis en dépression, avant polymérisation du liant, le matelas de fibres collectées étant également soumis à une opération de calandrage au cours de ce procédé. Les sites d'accrochage peuvent être réalisés après formation des feutres de laine minérale réalisés selon des procédés classiques ou au cours de ces procédés classiques (en munissant par exemple des roues de calandrage de poinçons pour pratiquer des évidements ou des motifs en creux pour faire les reliefs). Le liant utilisé pour la fabrication des feutres destinés à former les substrats selon l'invention est hydrophile (par exemple un liant phénolique sans silicone) et le taux de liant dans les substrats selon l'invention est par exemple compris entre 2 et 10 % en poids. Les substrats selon l'invention peuvent également comprendre un ou des agents tensioactifs. Le substrat selon l'invention peut présenter une ou plusieurs couches de laine minérale (les caractéristiques des couches pouvant être différentes ou non dans ce dernier cas), cette couche ou ces couches pouvant être plissée(s), crêpée(s), etc. Notamment, le substrat selon l'invention peut comprendre deux couches, la couche supérieure (en position d'utilisation du substrat) présentant un faible fasonaire pour éviter l'asphyxie et la couche inférieure présentant un fasonaire plus élevé pour assurer une bonne rétention d'eau en été.

Les substrats selon l'invention présentent un ou des sites d'accrochage en relief et/ou un ou des sites d'accrochage en creux (les creux pouvant éventuellement présenter des reliefs et vice-versa) et peuvent également présenter des logements pour les végétaux (incorporés lors de la plantation sous forme de graines, plants, plantules, boutures...) ces logements étant pratiqués dans le substrat selon des méthodes classiques, au plus tard au moment de la plantation (les substrats munis des logements pré-percés présentant cependant l'avantage de permettre une plantation plus rapide). Les végétaux peuvent également être disposés sur le substrat dénué de logements prévus à cet effet, notamment par épandage comme décrit dans le brevet WO 95/08259.

Les substrats selon l'invention sont particulièrement adaptés au développement des espèces rustiques, à développement essentiellement horizontal, peu exigeantes en eau et en éléments minéraux et ne nécessitant qu'un entretien réduit, en particulier des plantes de type crassulacées, notamment de sedums, ces plantes convenant parfaitement à l'utilisation en toitures-terrasses paysagères, en particulier en toitures-terrasses paysagères inaccessibles.

Les figures suivantes illustrent sans les limiter les substrats selon l'invention ainsi que les toitures-terrasses munies desdits substrats :
- la figure 1a représente une vue schématique de dessus d'un substrat selon l'invention,
- la figure 1b représente une vue du substrat de la figure 1a selon la coupe A-A,
- la figure 2a représente une vue schématique de dessus d'un autre substrat selon l'invention,
- la figure 2b représente une vue du substrat de la figure 2a selon la coupe A-A,
- la figure 3 représente une coupe schématique d'une toiture-terrasse munie d'un substrat selon l'invention.

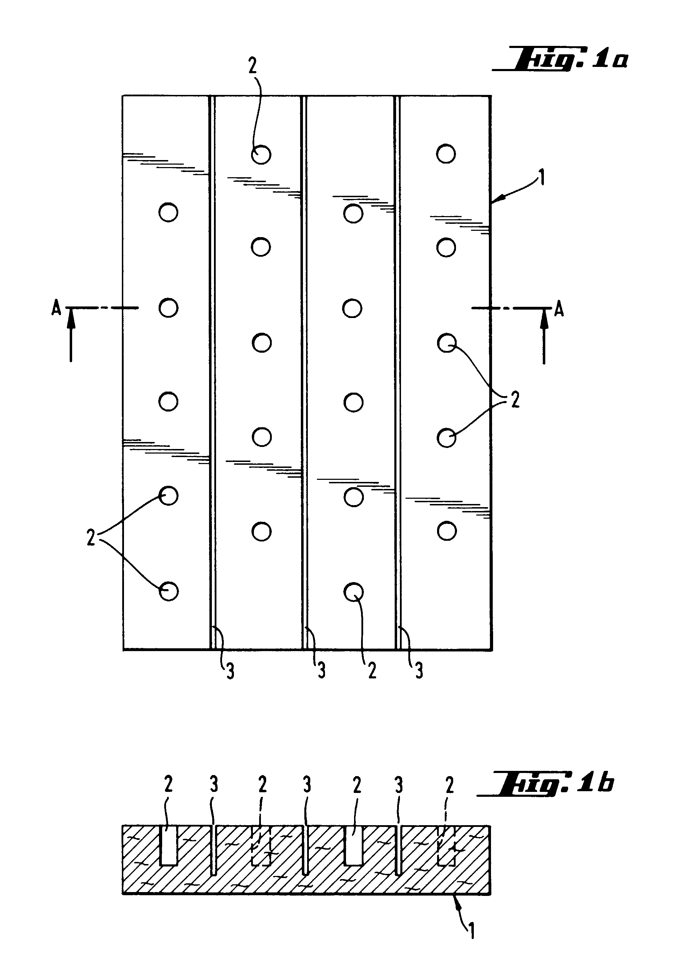

Le substrat représenté aux figures 1a et 1b est un panneau de 900 mm x 600 mm et de 50 mm d'épaisseur ; il est constitué d'une couche de laine de roche de 140 kg/m³ (1) et présente quatre rangées de logements (2) en quinconce, chaque logement de 3 cm de diamètre et 4,5 cm de hauteur, par exemple, étant destiné à recevoir une graine ou une bouture ou un plant (par exemple une motte de sedum). Les fentes (3) de 5 mm à 1 cm de largeur pratiquées entre les rangées, approximativement au milieu des rangées (ces fentes pouvant aussi bien se trouver décalées par rapport à ce milieu dans un autre mode de réalisation de l'invention) sont destinées à servir de sites d'accrochage aux parties aériennes des plantes pendant le développement de ces dernières. Selon d'autres modes de réalisation on peut également imaginer une seconde série de fentes disposées perpendiculairement aux fentes représentées et/ou la présence de plusieurs fentes entre chaque rangée de logements et/ou la présence d'autres sites d'accrochage en relief, etc.

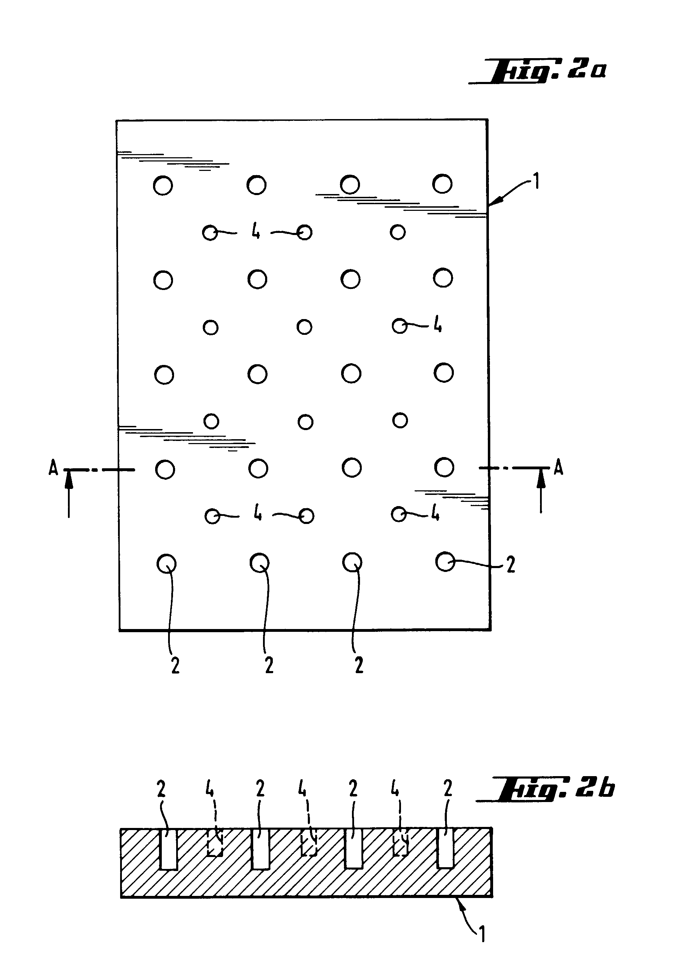

Le substrat représenté en figures 2a et 2b est constitué d'une couche de laine minérale (1) et présente quatre rangées chacune de cinq logements (2), chaque logement étant destiné à recevoir une graine ou une bouture ou un plant. Trois rangées de chacune quatre évidements (4) sont disposées par rapport aux premières rangées de façon à ce que les logements et les évidements soient disposés en quinconce, les évidements étant destinés à servir de sites d'accrochage aux parties aériennes des plantes pendant le développement de ces dernières. Selon d'autres modes de réalisation, on peut également imaginer d'autres sites d'accrochage en creux ou en relief en combinaison avec les évidements représentés.

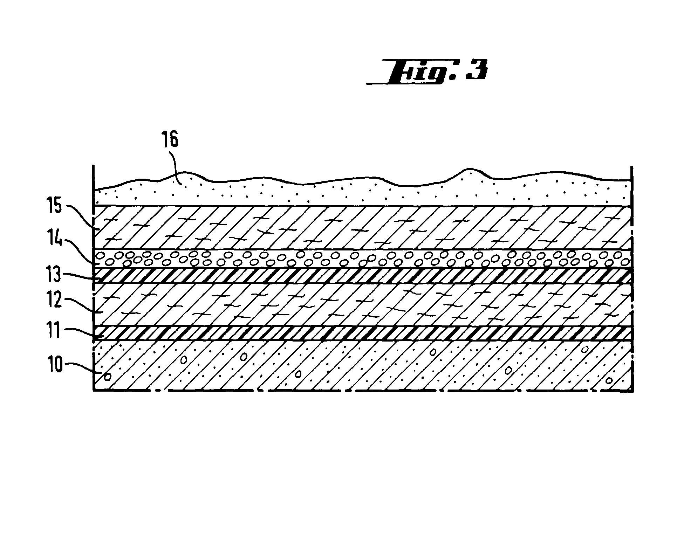

La toiture-terrasse représentée en figure 3 comprend les éléments suivants : un élément porteur (10) (par exemple en béton ou en acier), le cas échéant un pare-vapeur (11) (notamment lorsque l'élément porteur est en maçonnerie ou en béton cellulaire), le cas échéant un isolant (12) (par exemple un panneau de laine minérale muni d'un liant hydrophobe), une chape d'étanchéité (13) (par exemple une ou plusieurs couches d'un revêtement bitumeux) contenant préférentiellement un ou des agents anti-racines, une couche de drainage (14) (par exemple des billes d'argile ou une couche synthétique ou une couche de graviers, etc. ) et des substrats selon l'invention (15) (les caractéristiques de ces substrats n'étant cependant pas représentées sur la figure), ces substrats étant par exemple posés en quinconce pour obtenir une répartition homogène des logements de plantation et servant de support à des plantes (16) (schématiquement représentées à un stade de développement avancé, avec un taux de couverture du substrat de l'ordre de 100 %) telles que des sedums, en particulier des sedums album murale. Une bordure de gravillons, non représentée, entoure l'aire occupée par les substrats selon l'invention et, éventuellement, des chemins de circulation constitués, par exemple, de dalles en bois ou en béton, sont prévus entre des ensembles de substrats selon l'invention. Contrairement à l'utilisation de supports tourbeux, il n'est pas nécessaire de placer un filtre entre les substrats et la couche de drainage pour empêcher le colmatage de cette dernière par les particules du substrat.

Dans la structure représentée les végétaux offrent notamment l'avantage de constituer une couche isolante qui atténue les écarts de température au niveau de la chape d'étanchéité et la protège des chocs ; ils augmentent ainsi sa durée de vie.

Les substrats selon la présente invention sont particulièrement adaptés à la culture des plantes telles que les sedums sur les toitures-terrasses inaccessibles, plates ou à faible pente (inférieure à 10 %).

## Revendications

1. Substrat pour le développement des végétaux sur les toitures-terrasses, formé d'au moins une couche de laine minérale (1) et pourvu, sur sa face destinée à recevoir les végétaux, d'au moins un site d'accrochage en creux ou en relief (3, 4) distinct des logements éventuels (2) devant recevoir les végétaux lors de la plantation.

2. Substrat selon la revendication 1, *caractérisé en ce que* le site d'accrochage est un évidement ou une saillie de faibles dimensions.

3. Substrat selon la revendication 2, *caractérisé en ce que* le site d'accrochage est un évidement dont la profondeur est inférieure à 90 % de l'épaisseur du substrat.

4. Substrat selon la revendication 3, *caractérisé en ce que* le site d'accrochage se présente sous forme d'une rainure de largeur inférieure ou égale à 15 mm.

5. Substrat selon la revendication 3, *caractérisé en ce que* le site d'accrochage se présente sous forme d'un trou de diamètre inférieur ou égal à 40 mm ou de périmètre inférieur ou égal à 120 mm.

6. Substrat selon l'une quelconque des revendications 1 à 5, *caractérisé en ce que* la surface d'accrochage du substrat est supérieure d'au moins 3 % à celle du substrat dénué des sites d'accrochage en creux ou en relief.

7. Substrat selon l'une quelconque des revendications 1 à 6, *caractérisé en ce qu* il présente une masse volumique comprise entre 30 et 180 kg/m³.

8. Substrat selon l'une quelconque des revendications 1 à 7, *caractérisé en ce gu'il* présente une rétention d'eau à pF1 comprise entre 50 et 95 %.

9. Substrat selon l'une quelconque des revendications 1 à 8, *caractérisé en ce que* les fibres constituant la couche présentent un fasonaire compris entre 100 et 350 millimètres de colonne d'eau.

10. Substrat selon l'une quelconque des revendications 1 à 9, *caractérisé en ce qu'il* présente un taux de liant compris entre 2 et 10 % en poids.
